**Europäisches Patentamt**

**European Patent Office**

**Office européen des brevets**

(19)

(11) Numéro de publication : **0 316 375 B1**

(12) ## FASCICULE DE BREVET EUROPEEN

(45) Date de publication du fascicule du brevet :
08.07.92 Bulletin 92/28

(51) Int. Cl.⁵ : **G01N 30/88**

(21) Numéro de dépôt : **88903275.1**

(22) Date de dépôt : **06.04.88**

(86) Numéro de dépôt international :
**PCT/FR88/00169**

(87) Numéro de publication internationale :
**WO 88/08133 20.10.88 Gazette 88/23**

(54) **PROCEDE AUTOMATIQUE DE VALIDATION DES MESURES D'UN CHROMATOGRAPHE ET SYSTEME METTANT EN OEUVRE LE PROCEDE.**

(30) Priorité : **08.04.87 FR 8704931**

(43) Date de publication de la demande :
**24.05.89 Bulletin 89/21**

(45) Mention de la délivrance du brevet :
**08.07.92 Bulletin 92/28**

(84) Etats contractants désignés :
**AT BE CH DE GB IT LI LU NL SE**

(56) Documents cités :
**FR-A- 2 124 127**
**US-A- 3 299 693**
**US-A- 4 535 620**
**US-A- 4 648 260**

(73) Titulaire : **ELF FRANCE, Société Anonyme dite:**
**Tour Elf 2 place de la Coupole La Défense 6**
**F-92400 Courbevoie (FR)**

(72) Inventeur : **MONTAUD, André**
**14, rue des Tourelles**
**F-69005 Lyon (FR)**
Inventeur : **MESNIL, Jean-Pierre**
**42, rue du Professeur-Ranvier**
**F-69008 Lyon (FR)**
Inventeur : **CHARLEUX, Philippe**
**116, avenue des Frères-Lumière**
**F-69008 Lyon (FR)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

## Description

La présente invention concerne un procédé automatique de validation des mesures d'un chromatographe et le système de mise en oeuvre du procédé.

Il est connu par le brevet US 3 299 693 un procédé d'analyse chromatographique comportant une étape d'analyse du signal du détecteur sans injection préalable de produit à analyser, suivie d'une étape d'analyse d'échantillon. Toutefois un tel dispositif ne permet pas de diminuer la consommation des produits d'étalonnage qui sont onéreux et encore moins de diminuer certaines anomalies détectées lors de l'étape d'analyse du signal sans injection de produit.

Il est également connu par le brevet américain 4 648 260 un appareil d'analyse chromatographique dans lequel le signal sortant du détecteur est envoyé sur un convertisseur analogique digital pour ensuite être intégré par un microprocesseur. Après son intégration le taux de changement du signal est examiné pour déterminer si celui-ci est approximativement zéro de façon à entrer dans le cycle de purge. Toutefois un tel dispositif ne permet pas de diminuer la maintenance et de remédier à certaines anomalies détectées.

Un premier but de l'invention est donc de proposer un perfectionnement aux procédés d'évaluation ci-dessus qui permette, en outre, de diminuer la consommation de produit étalon onéreux, de diminuer la maintenance et de remédier à certaines anomalies détectées.

Ce premier but est atteint par le fait que le procédé d'évaluation et de validation des mesures d'un chromatographe comporte les étapes suivantes :

– étape d'analyse du signal fourni par le détecteur sans injection d'aucun produit, pour déterminer le niveau de ligne de base, le bruit de fond et la dérive du signal délivré par ce détecteur et corriger éventuellement son niveau en faisant varier la température du détecteur par action sur la résistance chauffante (32) ;

– étape de validation d'appareillage par injection d'un produit d'auto-contrôle dont les paramètres chromatographiques ont été préalablement étalonnés ;

– étape d'utilisation du résultat des mesures par action sur les paramètres physiques du chromatographe ;

– étape d'analyse de l'échantillon consistant à calculer les concentrations de produits présents dans l'échantillon.

Selon une autre caractéristique, la détermination des concentrations s'effectue, soit en faisant les rapports des surfaces des signaux des produits entre eux, si tous les produits sont détectés, soit en faisant les rapports des surfaces des signaux de chaque produit avec la surface d'auto-contrôle;

Selon une autre caractéristique, la détermination du rapport de surface des signaux s'effectue entre les surfaces des signaux des produits constituants l'échantillon à analyser et la somme des surfaces des signaux des produits constituants l'échantillon et normalisé à 100.

Selon une autre caractéristique, la détermination du rapport de surface des signaux s'effectue entre chaque surface des signaux des produits et la surface du signal du produit d'auto-contrôle.

Selon une autre caractéristique, l'étape de validation d'analyse est précédée d'une étape de calibration dans laquelle on introduit des produits étalons et des produits d'auto-contrôle pour déterminer un rapport entre les surfaces du signal des produits étalons et du signal des produits d'auto-contrôle.

Selon une autre caractéristique, l'action consiste dans le cas d'une traînée du signal correspondant au produit auto-contrôleur, à provoquer un accroissement de la température d'injecteur par l'intermédiaire d'une résistance (12).

Selon une autre caractéristique, si les répétabilités des surfaces des signaux des produits d'auto-contrôle sont correctes, l'action consiste à modifier la température du four en cas de variation de la différence de temps de rétention d'un premier produit d'auto-contrôle ayant un temps de rétention supérieur au temps de volume mort et d'un deuxième produit d'auto-contrôle sortant au temps de volume mort.

Selon une autre caractéristique, l'action consiste à mettre en oeuvre un autre injecteur monté sur le chromatographe en cas de détection d'une variation importante de surface des signaux des produits d'auto-contrôle.

Selon une autre caractéristique, dans l'étape de validation d'appareillage on introduit n fois le produit d'auto-contrôle pour mesurer la hauteur standard, la surface standard et le temps de rétention des pics du signal correspondant au produit d'auto-contrôle.

Selon une autre caractéristique, un calcul de répétabilité selon la formule $r = \dfrac{\sigma}{m}.\sqrt{2}$. 2 permet de détecter les problèmes au niveau du circuit fluidique.

Selon une autre caractéristique, le procédé comprend une étape d'initialisation permettant de déterminer tous les paramètres à tester et les limites de ces paramètres.

Selon une autre caractéristique, le procédé comprend une étape d'analyse des résultats fournis par l'échantillon, étape au cours de laquelle le système évalue le taux de séparation de la colonne au cours du temps par un calcul de résolution.

Un autre but de l'invention est également de proposer selon le procédé ci-dessus un système automatique d'analyse chromatographique et d'évaluation et validation des résultats.

Ce but est atteint par le fait que le procédé d'évaluation et d'auto-validation des mesures d'un système chromatographique comporte les étapes suivantes :

– Validation de l'appareillage ;

– Calibration de l'appareillage ;

– Analyse des échantillons ;

la première étape dite de validation, comportant les phases suivantes :

a) initialisation du système définissant les informations sur lesquelles va porter l'analyse ;

b) auto-contrôle du niveau et du bruit de fond du signal du détecteur lorsqu'aucun produit n'est injecté pour analyse dans le chromatographe ;

c) injection de produits étalons et de produits d'auto-contrôles ;

d) mesures sur le niveau et le bruit de fond du signal du détecteur et calculs des temps de rétention, de la répétabilité ;

e) auto-contrôle des détecteurs et des circuits fluidiques par analyse des résultats sur le temps de rétention du produit sortant au volume mort, sur la répétabilité des surfaces, sur le niveau et le bruit de fond du signal du détecteur ;

f) réitération des étapes a, b, c, d, précédentes.

la seconde étape dite de calibration comportant les phases suivantes :

– détermination d'un rapport entre la surface du pic de produit étalon et la surface du pic de produit d'auto-contrôle injecté dans l'étape e) de la phase de validation ;

– auto-contrôle du système d'injection par comparaison de la surface et de la hauteur des pics des produits d'auto-contrôle avec les valeurs enregistrées dans l'étape a) de la phase de validation et par évaluation de répétabilité.

et la troisième étape dite d'analyse comportant les phases suivantes :

a) auto-contrôle du niveau et du bruit de fond du signal du détecteur sans injection de produit ;

b) injection d'un échantillon puis des produits d'auto-contrôle ;

c) mesures et calculs du temps de rétention, des surfaces des pics, de la répétabilité des surfaces et des temps de rétention ;

d) auto-contrôle des circuits fluidiques par analyse des résultats sur le temps de rétention, sur la surface des pics du signal, sur la hauteur, sur la répétabilité des surfaces et des temps de rétention et sur l'évaluation de la résolution ;

e) réitération des étapes a, b, c, d, précédentes.

Selon une autre caractéristique, le procédé comporte au moins un double produit auto-contrôleur dont au moins un produit à un temps de rétention correspondant au temps de volume mort.

Un dernier but de l'invention est de proposer un système permettant la mise en oeuvre du procédé.

Ce but est atteint par le fait que le système permettant la mise en oeuvre du procédé comprend une colonne chromatographique (2) montée dans un four (20), un dispositif (4, 40, 41) d'alimentation en gaz porteur, un dispositif d'injection (1) des différents produits à analyser, un dispositif détecteur (3), un calculateur (5) avec le logiciel permettant la mise en oeuvre du procédé, un circuit de conversion analogique numérique (52) relié au détecteur (30) de la colonne chromatographique (2), un actionneur (42) du dispositif d'alimentation en gaz vecteur relié à un circuit de commande des actionneurs (50), lui-même relié et sous la commande du calculateur (5), un dispositif (11) actionneur d'une vanne d'injection (10) reliée au circuit (50) de commande des actionneurs pour délivrer, par une vanne de sélection (100), soit des produits d'auto-contrôle provenant d'un réservoir (103) à une pression déterminée par une microvanne (102), soit des échantillons provenant d'un autre réservoir (101), un dispositif (12) de chauffage de l'injecteur et un dispositif (32) de chauffage du détecteur relié à un circuit de commande de la température des dispositifs (12, 32, 21) de chauffage, de l'injecteur (1), du détecteur (30), de la colonne chromatographique (2), le circuit de commande de température (51) étant lui-même sous la commande du calculateur (5).

D'autres caractéristiques et avantages de la présente invention apparaîtront plus clairement à la lecture de la description ci-après faite en référence aux dessins annexés dans laquels :

– la figure 1 représente une vue schématique d'un système d'analyse chromatographique permettant la mise en oeuvre du procédé de l'invention;

– la figure 2 représente un organigramme simplifié schématisant le procédé de l'invention;

– la figure 3 représente l'organigramme des auto-contrôles de niveau "0" du procédé de la figure 2;

– la figure 4 représente l'organigramme des autos-contrôles de niveau "1 ", "2", "3" du procédé de la figure 2;

– la figure 5 représente les signaux sur lesquels s'effectue l'auto-contrôle de niveau "0";

– les figures 6A et 6B représentent les deux étapes du procédé de calibration utilisées dans le procédé de la figure 2;

– la figure 7 représente un exemple de signal délivré par l'analyseur sur lequel on effectue un calcul de répétabilité;

– la figure 8 représente le signal délivré par l'analyseur dans une phase d'analyse avec injection d'un double auto-contrôleur;

– la figure 9 représente les signaux délivrés par l'analyseur dans le cas de l'évolution de la séparation au cours du temps de deux produits de l'échantillon à analyser.

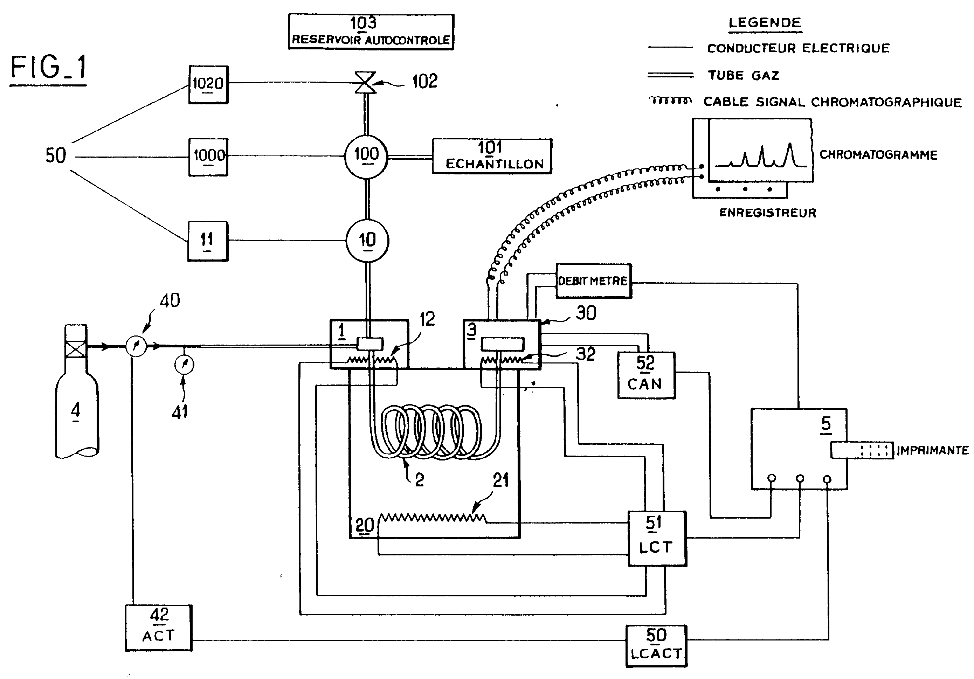

La figure 1 représente un système chromatographique permettant la mise en oeuvre de procédé. Ce système comporte une colonne chromatographique (2) montée dans un four dont la résistance chauffante (20) permet de déterminer la température dans la colonne. A l'intérieur de la colonne circule un gaz porteur fourni par une bouteille de gaz comprimé (4) qui est reliée par un manodétendeur (40) à l'entrée de la colonne (2). Ce manodétendeur (40) peut être commandé par un actionneur (42) de façon à faire varier le débit et la vitesse de circulation des gaz porteurs dans la colonne. Un manomètre (41) délivrant un signal représentatif de la vitesse des gaz est relié à l'entrée analogique numérique d'un calculateur (5) (cette liaison n'étant pas représentée sur la figure 1). Un disjositif injecteur (1) des produits à analyser ou des produits d'auto-contrôle est constitué de façon connue par une vanne d'injection (10) ou une seringue (non représentée) permettant l'introduction de ces produits à l'entrée de la colonne (2). Cette vanne (10) est actionnée par un actionneur (11) gui est relié par une liaison non représentée à un circuit (50) constitué par une logique de commande des actionneurs (11) et (42). Cette vanne (10) reçoit par une vanne de sélection (100) commandée par un actionneur (1000), soit les produits à échantillonner provenant d'un réservoir (101), soit les produits d'auto-contrôle provenant, à travers une microvanne (102) d'une bouteille de gaz comprimé (103). Cette microvanne (102) est commandée par un actionneur (1020) contrôlé par le circuit (50)

Il est bien évident que pour des raisons de commodité de représentation on a fait figurer une seule seringue (10) et un seul actionneur (11) mais l'invention comporte une pluralité de seringues et d'actionneurs de façon à pouvoir sélectionner les produits d'auto-contrôle, les échantillons à analyser, les produits étalons et éventuellement de permettre l'introdution des échantillons à analyser par plusieurs seringues différentes comme on le verra par la suite.

Le dispositif injecteur (1) comporte également une résistance chauffante (12) qui est reliée à un circuit (51) constituant une logique de commande de la température de l'injecteur, du four et du détecteur. La résistance (20) du four de la colonne (2) est elle aussi reliée à ce circuit (51). A la sortie de la colonne (2) se trouve un dispositif détecteur (3) constitué par des détecteurs classiques du type F.I.D. (détecteur à ionisation de flamme) ou du type catharométrique ou autres. Ce détecteur (30) est relié par des fils (31) à un convertisseur analogique numérique (52) branché à l'entrée du calculateur (5). De même une résistance chauffante (32) est reliée aux deux circuits de commande en température (51). Le circuit (50) des actionneurs des injecteurs est constitué par une carte tout ou rien tandis que la partie du circuit (50) reliée à l'actionneur du manodétendeur est un dispositif de conversion numérique analogique. De même, le circuit de commande en température (51) est constitué par un dispositif de conversion numérique analogique. Le calculateur comporte toutes les ressources nécessaires à la mise en oeuvre du procédé, à savoir les mémoires de masse permettant le stockage des logiciels d'auto-validation et d'auto-contrôle des logiciels d'exploitation des résultats, ainsi qu'une console de visualisation des messages et un dispositif d'introduction de données, par exemple clavier, permettant d'introduire les données nécessaires à l'initialisation du système.

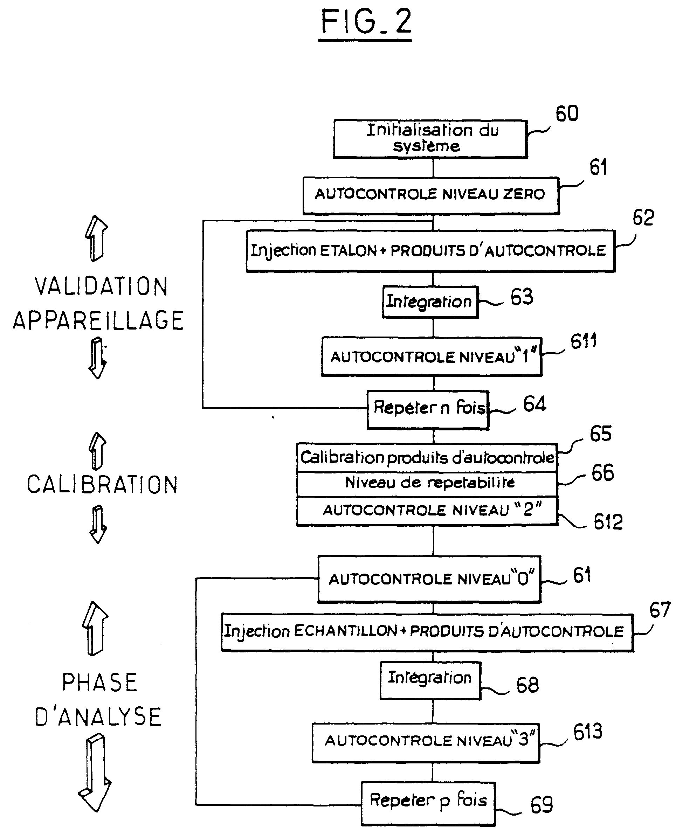

Le procédé d'évaluation et d'auto-validation de l'analyse chromatographique comporte, comme représenté à la figure 2, différentes étapes. Le procédé d'auto-validation commence par une étape (60) d'initialisation du système au cours de laquelle on détermine le nom du fichier dans lequel on conservera un certain nombre de résultats pour permettre les calculs de répétabilité et d'évolution de la séparation au cours au temps. De même on définira le nombre d'informations et le type d'informations contenues par ces fichiers, ensuite on définit les types de tests d'auto-validation que l'on effectuera, par exemple, par contrôle de la ligne de base, des pics de références, calcul de résolution, etc... On définit également les valeurs des signaux sur lesquels portera l'analyse, par exemple : hauteur, surface, temps de rétention et pour chaque signal on définira deux couples de valeur. Un premier couple dit valeur haute et basse et un deuxième couple dit valeur très haute et très basse. Le premier couple de valeurs permet un fonctionnement du dispositif en mode dégradé avec une alarme ou une intervention automatique du dispositif, comme on le verra par la suite, tandis que le deuxième couple de valeurs provoque l'arrêt du dispositif. Une fois cette phase d'initialisation du système terminée, le système passe à l'étape (61) d'auto-contrôle de niveau "0".

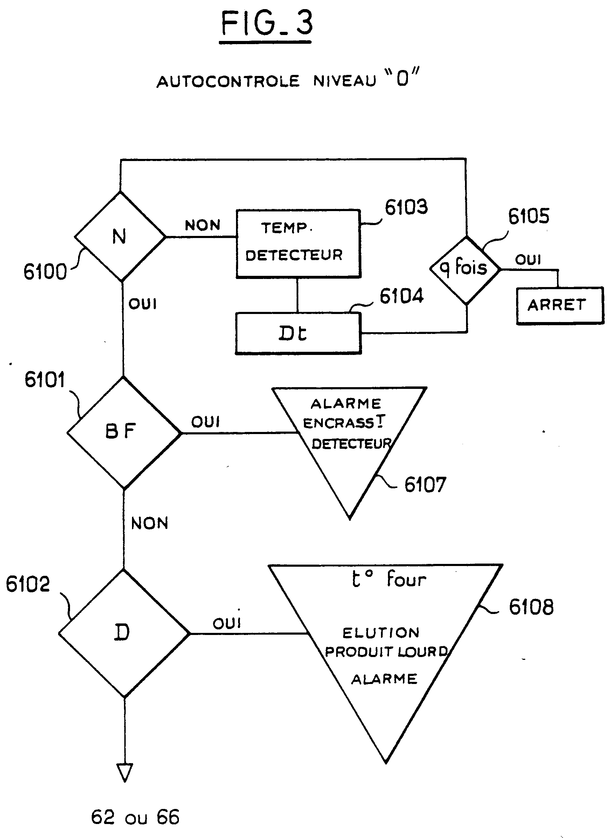

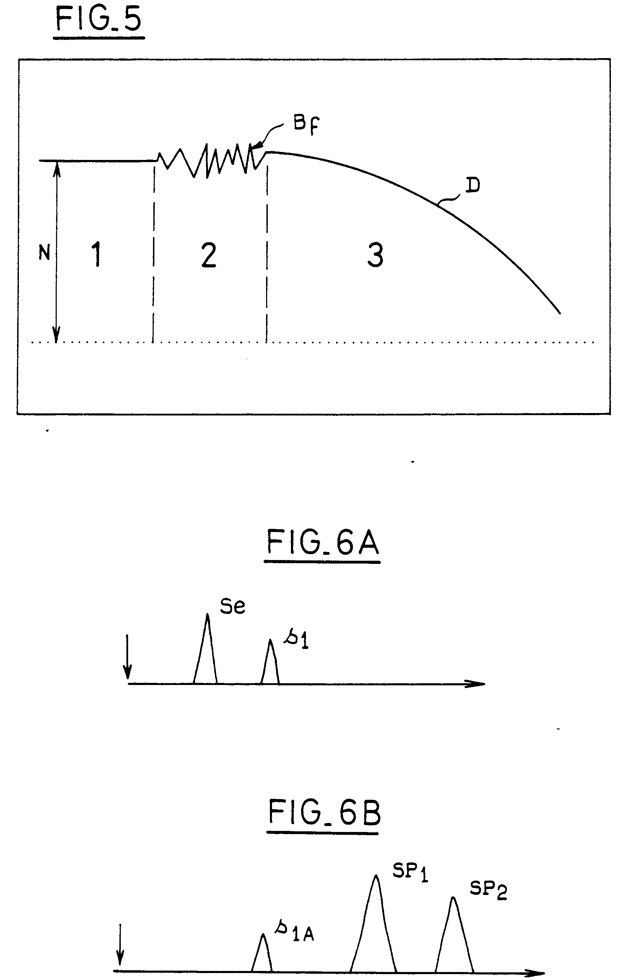

Cette étape (61) d'auto-contrôle de niveau "0" est représentée de façon peu détaillée à la figure 3. Au cours de cette étape d'autocontrôle de niveau "0" on analyse le signal délivré par le détecteur (30) lorsqu'aucun produit n'est introduit dans la colonne. Ce signal est représenté à la figure 5 et comporte un niveau (N) de ligne de base, un bruit de fond (B F) et une dérive (D). Au cours de l'auto-contrôle de niveau "0" on effectue, comme représenté à la figure 3, un premier test représenté par l'étape (6100) au cours duquel le système contrôle que la valeur (N) reste dans les limites fixées. Dans le cas où (N) n'est pas dans la limite fixée, le logiciel en déduit qu'il s'agit d'une variation de la température du détecteur (cas du catharomètre) et déclenche à l'étape (6104) un accroissement de la température du détecteur d'une valeur (Dt) puis réitère cette opération, après temporisation, un certain nombre de fois jusqu'à obtenir la valeur (N). Si au bout d'un nombre de fois (q) on n'a toujours pas atteint la valeur (N), le test effectué à l'étape (6105), indiquant le dépassement ou non du nombre de fois (q), provoque l'arrêt du système représenté à l'étape (6106). Dans le cas où la valeur (N) est correcte, le système effectue à l'étape (6101) un test sur la présence du bruit de fond (B F). Si ce bruit de fond (B F) est présent, l'étape (6107) indique un encrassement du détecteur et le système déclenche une alarme (6108). Dans le cas où le bruit de fond est acceptable, le programme passe à l'étape suivante (6102) au cours de laquelle on détermine s'il y a une dérivé du signal. Dans le cas de la présence d'une dérive du signal, le système génère une alarme (6109) indiquant un problème soit de température du four, soit de fuite au cours de la programmation des températures, soit une élution de produits lourds. Dans le cas où tous ces tests ont été franchis, le système enchaîne avec les étapes suivantes du procédé d'auto-validation. Ensuite le système passe à l'étape (62) qui consiste en une injection de produits étalons et de produits d'auto-contrôles. En fin d'analyse le signal est intégré et les informations concernant les pics étalons et d'auto-contrôle sont stockés sous la forme de temps de rétention, de surface, de largeur et hauteur des pics et sont comparés aux valeurs de référence introduites dans la phase d'initialisation. Cette comparaison constitue l'étape dite d'auto-contrôle de niveau "1" représentée par l'étape (611) de la figure 2. En cas de problème, l'analyseur est automatiquement arrêté, la cause de l'arrêt est indiquée en clair. Si le fonctionnement est correct, le micro-ordinateur (5) repart à l'étape (62) d'injection du produit étalon et du produit d'auto-contrôle et le cycle est répété n fois, comme représenté par l'étape (64).

Ces différentes étapes (61) à (64) constituent ce que l'on appelle la validation de l'appareillage et sont suivies d'une phase dite de calibration de l'appareillage constituée par les étapes (65),(66) et (612). L'analyseur ayant passé les étapes de validation, passe à l'étape (65) de calibration de produit d'auto-contrôle qui permet, comme représenté aux figures 6 par l'utilisation des pics des signaux résultant du passage du produit étalon et du produit d'auto-contrôle dans la colonne, de calibrer le produit d'auto-contrôle. En effet, le produit étalon est connu avec une très grande précision et, par conséquent, au cours de cette étape (65), on sait que le pic (Se) correspondant au produit étalon représente un certain pourcentage (X) du produit étalon injecté. On se sert de cette information pour déterminer le pourcentage (P A C) du produit auto-contrôleur qui corespond à la surface (s1) du signal délivré par l'analyseur. On effectue une règle de trois et on obtient $P\,A\,C = \dfrac{X}{se} \cdot s1$

Par la suite, cette information sera utilisée pour déterminer les pourcentages de produit (P 1) et les pourcentages de produit (P 2) représentés par les surfaces (S P 1) et (S P 2) du signal de l'analyseur en réponse à l'injection d'un échantillon comportant trois produits (P 1), (P 2) et ( P N D), (P N D) étant un produit non détecté par le détecteur (normalisation externe). En effet, puisque l'on sait que la surface s1 correspond au pourcentage (P A C), par une règle de 3 on en déduit :

$$P1 = \frac{SP1.PAC}{s1} \quad \text{et} \quad P2 = \frac{SP2 \cdot PAC}{s1A}$$ où s1A représente la surface du pic du produit d'auto-contrôle, lors de l'injection des produits à doser.

Dans le cas où tous les produits de l'échantillon à analyser sont détectés, la phase de calibration, représentée à la figure 6A, au cours de laquelle on injecte un étalon et le produit de contrôle, n'est plus nécessaire. En effet, il suffit de calculer les surfaces des différents produits constituant l'échantillon, d'effectuer la somme de ces surfaces et de normaliser à 100 pour déterminer les pourcentages de produit représenté par ces surfaces.

Dans le cas, l'injection du produit d'auto-contrôle avec l'échantillon, représenté à la figure 6B, sert uniquement à la validation de l'analyse.

Une fois l'étape de calibration franchie, on passe à l'étape (66) qui constitue l'étape d'évaluation de la répétabilité des temps de rétention et des surfaces. Cette étape permet de détecter les problèmes au niveau fluidique ou au niveau de la température du four de la colonne de chromatographie. La répétabilité est évaluée par la formule suivante : $r = \dfrac{\sigma}{m} . \sqrt{2}$ . 2 , r étant la répétabilité, σ étant l'écart type du temps de rétention ou de la surface, m étant la moyenne du temps de rétention ou de la surface. Cette détermination de la répétabilité constitue les auto-contrôles de niveau "2" représentés par l'étape (612). Après celà la phase de calibration de l'appareillage est terminée et l'on passe à une phase dite d'analyse constituée par les étapes (61), (67), (68), (613) et (69). Cette phase d'analyse comporte, premièrement une étape (61) d'auto-contrôle de niveau "0", suivie par une étape (67) d'injection d'échantillon et de produit d'auto-contrôle, suivie par une étape (68) d'intégration, elle-même suivie par une étape (613) d'auto-contrôle de niveau "3". Enfin une étape de réitération (69) permet de répéter cette phase d'analyse un nombre p de fois. Dans cette phase d'analyse, l'étalon est remplacé par l'échantillon à analyser. En marche continue le cycle échantillon plus produit d'autocontrôle se répète p fois. Le signal brut et intégré subit l'auto-contrôle de niveau "3" gui comprend les contrôles de niveau "0", de niveau "1" et les test de répétabilité de niveau "2". Ainsi, comme on l'a vu, l'autocontrôle de niveau "0" permet de vérifier le niveau du signal, le bruit de fond et la dérive. L'auto-contrôle de niveau "1" permet de tester les détecteurs et le circuit fluidique. L'auto-contrôle de niveau "2" permet de tester le système d'injection et les fuites . L'auto-contrôle de niveau "3" cumule les tests précédents avec le test de la température du four, l'évaluation de l'évolution de la colonne et de la résolution. Dans le cas où les seuils très hauts et très bas signalant un problème grave sont dépassés, le système bloque la phase d'analyse, une nouvelle injection du produit d'auto-contrôle est effectuée pour confirmer le diagnostic et arrêter le système en cas de confirmation. Le redémarrage du système, après maintenance sera effectué par la phase de validation d'appareillage.

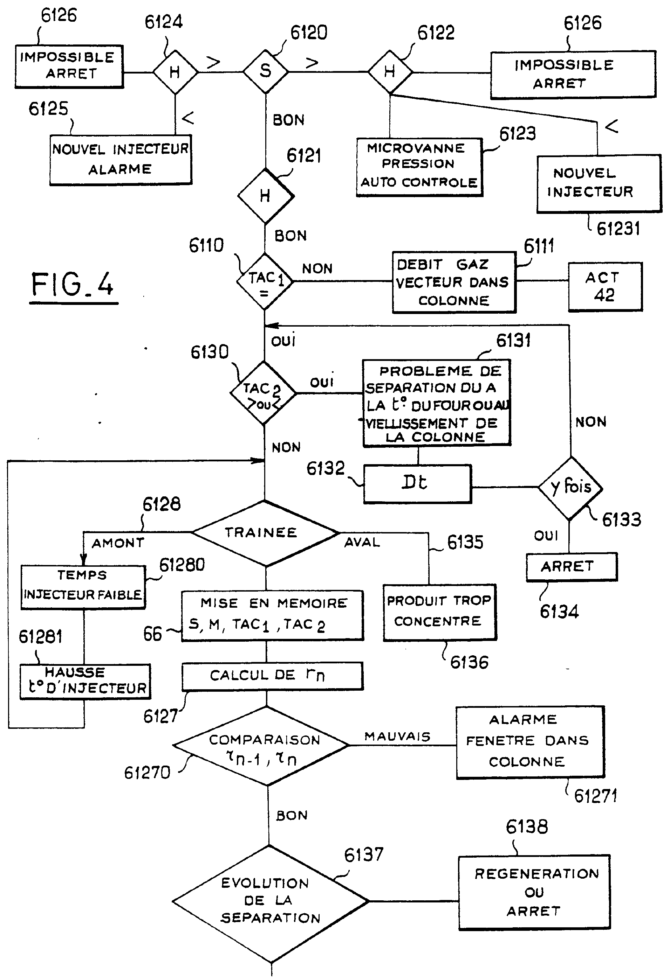

La figure 4 représente les différents tests effectués avec les actions entreprises par le système ou les messages affichés. Dans cette figure les tests correspondant à un auto-contrôle de niveau "1" correspondent aux références (611X) X ayant une valeur de 1 à 9, les tests correspondant à un auto-contrôle de niveau "2" à des références du type (612X) et les tests correspondant à un auto-contrôle de niveau "3" une référence du type (613X). Comme on l'a déjà explicité précédemment, l'auto-contrôle de niveau "3" inclut tous les tests des niveaux inférieurs plus les tests comportant les références du type (613X).

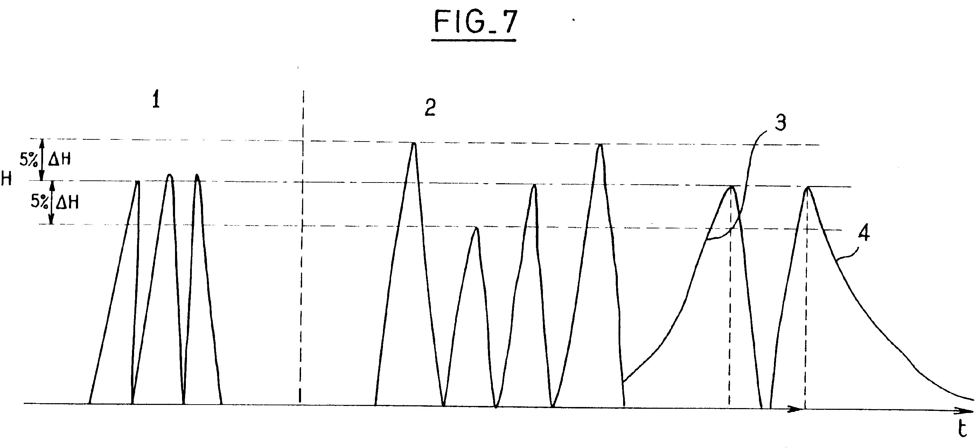

L'auto-contrôle commencé par une étape de tests (6120) sur la surface. Si la surface est supérieure à un valeur, le système teste la hauteur du pic dans un étape (6122), dans le cas où la hauteur est correcte, l'étape (6126) arrête le système car ceci correspond à une quasi impossibilité. Si au cours du test (6122) la hauteur s'avère supérieure à une valeur, le système en conclut qu'il y a une surpression à l'injection qui met en oeuvre à l'étape (6123) une microvanne (102) permettant de réduire, grâce à son actionneur (1020) commandé par le circuit (50), la pression d'arrivée des gaz d'auto-contrôle. Dans le cas où la hauteur est inférieure à une valeur, le système en conclut qu'il y a un problème de vitesse d'injection et met en oeuvre, à l'étape (61230), un nouvel injecteur. Dans le cas où la surface est inférieure à une valeur, le système poursuit par un test (6124) sur la hauteur, si la hauteur est bonne, le système s'arrête à l'étape (6126) car ceci corrrespond à une impossibilité. Dans le cas où la hauteur est inférieure, le système en conclut qu'il y a bouchage d'injecteur et met en oeuvre un nouvel injecteur à l'étape (6125). Dans le cas où à l'étape (6120) la surface S était bonne, on passe à l'étape (6121) qui constitue un test sur la hauteur H. Si cette hauteur est bonne, le système passe à l'étape (6110) qui est test sur le temps de rétention d'un premier produit d'auto-contrôle(T A C 1). Au cours de ce test, le système vérifie que (T A C 1) est égal à (T V M), (T V M) étant le temps de volume mort. Le temps de volume mort est le temps au bout duquel un produit d'auto-contrôle n'ayant aucune affinité avec la colonne de séparation sort de celle-ci et est détectée par le détecteur (30). Dans le cas où ce test n'est pas satisfait, le système affiche à l'étape (6111) un message indiquant un problème de débit dans la colonne du gaz vecteur et provoque, par l'actionneur (42) une augmentation ou une diminution du débit du gaz vecteur. Dans le cas où ce test (6110) est satisfaisant, le système passe au test (6130) au cours duquel il vérifie que le temps de rétention d'un deuxième produit d'auto-contrôle (T A C 2) est supérieur ou inférieur à une valeur attendue. Dans ce cas le système affiche à l'étape (6131) qu'il y a un problème de séparation dûe aux températures de la colonne ou au vieillissement de celle-ci dû à des problèmes de fuite. Dans le cas où le test (61271) est correct, le système passe à l'étape (6132) dans laquelle il effectue une commande d'accroissement de température (D t) du four par l'intermédiaire du circuit (L C T) et de la résistance (20). L'étape (6133) constitue un test sur le nombre y de boucles effectuées et retourne à l'étape (6130) si le nombre de boucles y n'est pas atteint et dans le cas où le nombre y est atteint, passe à l'étape (6134) qui arrête le système. Dans le cas où (T A C 2) correspond à la valeur attendue, le système passe à une étape d'évaluation de la traînée du signal correspondant au produit auto-contrôleur. Si ce signal comporte une traînée amont (courbe 3, figure 7) correspondant à la branche (6128), le système affiche à l'étape (61280) un message température d'injecteur trop faible et commande à l'étape (61281) un accroissement de la température d'injecteur par l'intermédiaire du circuit (51) et de la résistance (12), puis se reboucle sur le test de la traînée.

Dans le cas où le signal comportait une traînée aval (courbe 4, figure 7) représentée par la branche (6135), le système affiche à l'étape (6136) un message "produit trop concentré" et l'étape de test sur la traînée est suivie d'une étape (66) de mise en mémoire des valeurs des surface, hauteur et temps de rétention et de la largeur w en temps des pics à 0,604 de la hauteur du produit pour permettre, par la suite, d'utiliser ces différentes valeurs dans les différents calculs de répétabilité ou de résolution. Cette étape est suivie d'une étape (6127) de calcul de la résolution sur la surface et le temps de rétention. Cette étape se poursuit par un test à l'étape (61270) comparant la répétabilité de la mesure n à la répétabilité n - 1 . Dans le cas où ce test indique une mauvaise évolution de la répétabilité, le système affiche, à l'étape (61271) une alarme et un message indiquant un problème au niveau fluidique ou une fuite dans la colonne. Dans le cas où le test est bon, le système passe à l'étape (6137) au cours de laquelle la résolution est calculée puis à l'étape (6138) au cours de laquelle, à la suite de l'évaluation de la résolution, il détermine s'il doit effectuer, par exemple une régénération de la colonne ou l'arrêt de celle-ci. La résolution

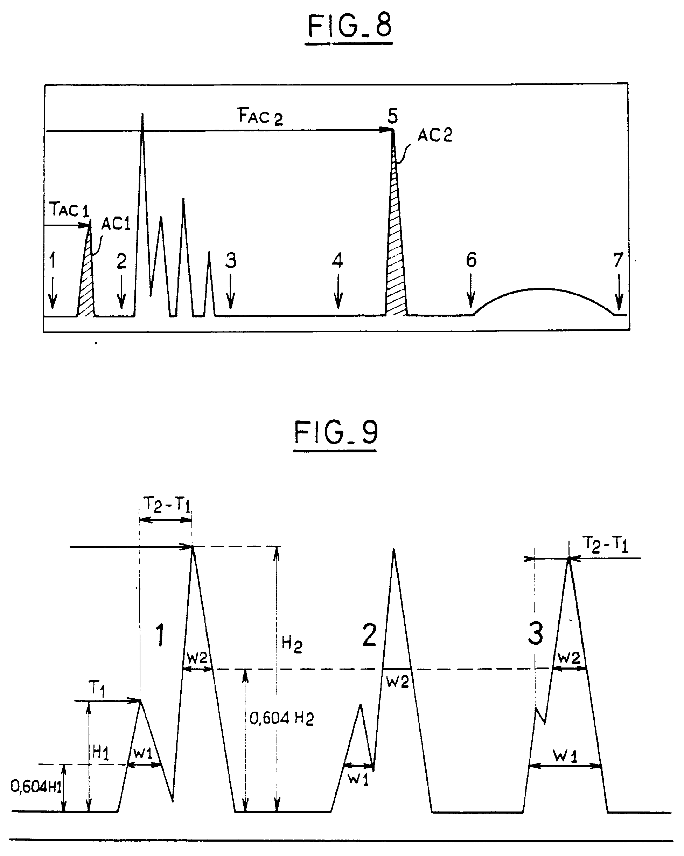

$( res )$ est : $res = \dfrac{(T\,2 - T\,1)^2}{w\,1\,+\,w\,2}$ , T 2 étant le temps de rétention d'un produit "2", T 1 le temps de rétention d'un produit "1", w1 égal la largeur en temps à 0,604 de la hauteur du produit "1", w2 étant la largeur en temps à 0,604 de la hauteur du produit "2". Ces valeurs (T 2),(T 1), (w1),(w2) sont représentées à la figure 9 et le calcul de la résolution permet de détecter les évolutions telles que celles qui sont représentées entre les pics figurant dans l'analyse (1), les pics figurant dans l'analyse (2) et l'analyse (3) de la figure 9.

Cette évaluation de la résolution est particulièrement utile dans certains cas. Si l'on prend l'exemple de la séparation de l'air effectué sur un tamis moléculaire, séparant l'azote et l'oxygène, la présence d'eau dans l'échantillon va progressivement polluer le tamis moléculaire et la qualité de séparation de ce tamis va diminuer. Dans le cas où on se limiterait à effectuer les autres contrôles de niveau "2" avec les produits d'auto-contrôle sans effectuer les contrôles de niveau "3" sur l'analyse, le système indiquerait que tout va bien alors qu'en fait les résultats des mesures de séparation iraient en se détériorant. En calculant la résolution entre deux pics correspondant à deux produits différents, on va détecter une telle situation et on pourra, par exemple, regénérer le tamis moléculaire en interrompant l'arrivée d'échantillons et en faisant monter la température du four de la colonne, de façon à désorber l'eau contenue dans le tamis. Dès que cette régénération aura été effectuée, on redémarre le système à la phase de calibration (65). La figure 8 représente le signal délivré par l'analyseur au cours de l'étape (67) de l'organigramme de la figure 2, étape dans laquelle on injecte l'échantillon constitué par six produits et un produit auto-contrôleur comportant en fait deux auto-contrôleurs (A C 1),(A C 2), le premier ayant un temps de rétention (T A C 1) correspondant au temps de volume mort (T V M).

La figure 7 représente, dans la partie 1, un ensemble de pics correspondant à la détection d'un produit donné dans des phases successives d'analyse. Dans cette partie 1 on constate que l'ensemble des trois pics reste dans les limites de la valeur (H) fixée et que la hauteur de ces pics varie peu. On peut dire que dans cette partie 1 la répétabilité est bonne. Dans la partie 2 de la figure, on a représenté un ensemble de pics correspondant au même produit, chacun de ces pics ayant été obtenu dans une phase d'analyse différente. On constate qu'un des pics reste dans les limites fixées lors de l'étape d'initialisation du système, mais si l'on calcule le coefficient de répétabilité, on s'aperçoit qu'avec de telles mesures la répétabilité sera très mauvaise. Et ceci permet de conclure qu'il y a un problème au niveau fluidique.

De même un calcul sur l'écart de temps de rétention d'un produit auto-contrôleur peut permettre de déterminer la température du four de la colonne de sépération 2 ou de vérifier la bonne programmation de celle-ci. Ainsi, par la loi de Clapeyron on sait que le log T =f

$$\left(\frac{K}{t}\right),$$

T étant le le temps de rétention, t étant la température du four en degré Kelvin , et K une constante dépendante du produit. Les variations du logarithme du temps de rétention seront inversement proportionnelles aux variations de température du four.

On comprend que le système et le procédé décrit permettent non seulement d'économiser les produits étalons onéreux, mais encore d'assurer un contrôle et une validation permanente des analyses d'échantillons et de diminuer la maintenance du système en remédiant automatiquement à certaines défaillances et en signalant par un message explicitant la démarche à suivre celles auxquelles il n'a pu remédier automatiquement.

D'autres modifications à la portée de l'homme de métier font également partie de l'esprit de l'invention.

## Revendications

1. Procédé d'évaluation et d'autovalidation des mesures d'un chromatographe par étude fine du signal chromatographique et des produits d'auto-contrôle afin de contrôler la bonne marche de l'appareillage et de corriger d'éventuelles dérives des paramètres chromatographiques, comportant les étapes suivantes :
   – étape d'analyse du signal fourni par le détecteur (30) sans injection d'aucun produit, pour déterminer le niveau de ligne de base, le bruit des fond et la dérive du signal délivré par ce détecteur (30) et corriger éventuellement son niveau en faisant varier la température du détecteur (30) par action sur la résistance chauffante (32) ;
   – étape de validation d'appareillage par injection d'un produit d'auto-contrôle dont les paramètres chromatographiques ont été préalablement étalonnés ;
   – étape d'utilisation du résultat des mesures par action sur les paramètres physiques du chromatographe ;
   – étape d'analyse de l'échantillon consistant à calculer les concentrations de produits présents dans l'échantillon.

2. Procédé selon la revendication 1, caractérisé en ce que le calcul des concentrations s'effectue, soit en faisant des rapports des surfaces des signaux des produits entre eux, si tous les produits sont détectés, soit en faisant les rapports des surfaces des signaux de chaque produit avec la surface du produit d'auto-contrôle.

3. Procédé selon la revendication 2, caractérisé en ce que la détermination du rapport de surface des signaux s'effectue entre les surfaces des signaux des produits constituants l'échantillon à analyser et la somme des surfaces des signaux des produits constituants l'échantillon et normalisé à 100.

4. Procédé selon la revendication 2, caractérisé en ce que la détermination du rapport de surface des signaux s'effectue entre chaque surface des signaux des produits et la surface du signal du produit d'auto-contrôle.

5. Procédé selon la revendication 1 ou 4, caractérisé en ce que l'étape de validation d'analyse est précédée d'une étape de calibration dans laquelle on introduit des produits étalons et des produits d'auto-contrôles pour déterminer un rapport entre les surfaces du signal des produits étalons et du signal des produits d'auto-contrôles.

6. Procédé selon la revendication 1, caractérisé en ce que l'action consiste dans le cas d'une traînée du signal correspondant au produit auto-contrôleur, à provoquer un accroissement de la température d'injecteur par l'intermédiaire d'une résistance (12).

7. Procédé selon la revendication 1, caractérisé en ce que l'action consiste, dans le cas où la répétabilité des surfaces des signaux des produits d'auto-contrôle est correcte, à modifier la température du four en cas de variation de la différence de temps de rétention d'un premier produit d'auto-contrôle ayant un temps de rétention supérieur au temps de volume mort et d'un deuxième produit d'auto-contrôle sortant du temps de volume mort.

8. Procédé selon la revendication 1, caractérisé en ce que l'action consiste à mettre en oeuvre un autre injecteur monté sur le chromatographe (2) en cas de détection d'une variation importante de la surface des signaux des produits d'auto-contrôle.

9. Procédé selon l'une quelconque des revendications précédentes, caractérisé en ce que, dans l'étape de validation d'appareillage on introduit n fois les produits d'auto-contrôles pour mesurer la hauteur standard, la surface standard et le temps de rétention des pics du signal correspondant aux produits d'auto-contrôles.

10. Procédé selon l'une quelconque des revendications précédentes, caractérisé en ce qu'il comporte un calcul de la répétabilité (r) selon la formule r$= \dfrac{\sigma}{m}.\sqrt{2}$. 2 pour permettre de détecter les problèmes au niveau du circuit fluidique.

11. Procédé selon l'une quelconque des revendications précédentes, caractérisé en ce qu'il comprend une étape d'initialisation permettant de déterminer tous les paramètres à tester et les limites de ces paramètres.

12. Procédé selon l'une quelconque des revendications précédentes, caractérisé en ce qu'il comprend une étape d'analyse des résultats fournis par l'échantillon, étape au cours de laquelle le système évalue le taux de séparation de la colonne au cours du temps par un calcul de résolution.

13. Procédé d'évaluation et d'auto-validation des mesures d'un système chromatographique, selon la revendication 1, caractérisé en ce qu'il comporte une première étape, dite de validation comportant les phases suivantes :

a) initialisation du système définissant les informations sur lesquelles va porter l'analyse ;

b) auto-contrôle du niveau et du bruit de fond du signal du détecteur lorsqu'aucun produit n'est injecté pour analyse dans le chromatographe ;

c) injection des produits étalons et des produits d'auto-contrôles ;

d) mesures sur le niveau et le bruit de fond du signal du détecteur et calculs des temps de rétention, de la répétabilité ;

e) auto-contrôle des détecteurs et des circuits fluidiques par analyse des résultats sur le temps de rétention du produit sortant au volume mort, sur la répétabilité des surfaces, sur le niveau et le bruit de fond du signal du détecteur ;

f) réitération des étapes a, b, c, d, précédentes.

14. Procédé d'évaluation et d'auto-validation des mesures d'un système chromatographique selon la revendication 13 caractérisé en ce qu'il comporte une seconde étape dite de calibration comportant les phases suivantes :

– détermination d'un rapport entre la surface du pic de produit étalon et la surface du pic de produit d'auto-contrôle injecté dans l'étape e de la phase de validation ;

– auto-contrôle du système d'injection par comparaison de la surface et de la hauteur des pics des produits d'auto-contrôle avec les valeurs enregistrées dans l'étape a de la phase de validation et par évaluation de la répétabilité.

15. Procédé d'évaluation et d'auto-validation des mesures d'un système chromatographique, selon la revendication 14 caractérisé en ce qu'il comporte une troisième étape dite d'analyse comportant les étapes suivantes :

a) auto-contrôle du niveau et du produit de fond du signal du détecteur sans injection de produit ;

b) injection d'un échantillon puis des produits d'auto-contrôles ;

c) mesures et calculs des temps de rétention, des surfaces des pics, de la répétabilité des surfaces, des temps de rétention ;

d) auto-contrôle des circuits fluidiques par analyse des résultats sur le temps de rétention, sur la surface des pics du signal, sur la hauteur, sur la répétabilité des surfaces et des temps de rétention et sur l'évaluation de la résolution ;

e) réitération des étapes a, b, c, d, précédentes.

16. Procédé selon l'une quelconque des revendications 13 à 15, caractérisé en qu'il comporte au moins un double produit auto-contrôleur dont un produit a un temps de rétention correspondant au temps de volume mort.

17. Système permettant la mise en oeuvre du procédé selon l'une quelconque des revendications précédentes comprenant une colonne chromatographique (2) montée dans un four (20), un dispositif (4, 40, 41) d'alimentation en gaz porteur, un dispositif d'injection (1) des différents produits à analyser, un dispositif détecteur (3), un calculateur (5) avec le logiciel permettant la mise en oeuvre du procédé, un circuit de conversion analogique numérique (52) relié au détecteur (30) de la colonne chromatographique (2), un actionneur (42) du dispositif d'alimentation en gaz vecteur relié à un circuit de commande des actionneurs (50), lui-même relié et sous la commande du calculateur (5), un dispositif (11) actionneur d'une vanne d'injection (10) reliée au circuit (50) de commande des actionneurs pour délivrer par une vanne de sélection (100), soit des produits d'autocontrôle provenant d'un réservoir (103) à une pression déterminée par une microvanne (102), soit des échantillons provenant d'un autre réservoir (101), un dispositif (12) de chauffage de l'injecteur (1) et un dispositif (32) de chauffage du détecteur (30) relié à un circuit de commande de la température des dispositifs (12, 32, 20) de chauffage, de l'injecteur (1), du détecteur (30), de la colonne chromatographique (2), le circuit de commande de température (51) étant lui-même sous la commande du calculateur (5).

## Patentansprüche

1. Verfahren zum Abschätzen und zur Selbstvalidierung der Messungen eines Chromatographen durch Feinuntersuchung des chromatographischen Signals und der Substanzen für die Selbstkontrolle, um das richtige Funktionieren der Apparatur zu kontrollieren und um eventuelle Abweichungen der chromatographischen Parameter zu korrigieren, das die folgenden Schritte aufweist:
    – Schritt zur Analyse des von dem Detektor (30) gelieferten Signals ohne Einspeisung irgendeiner Substanz, um den Basislinienpegel, das Grundrauschen und die Abweichung des von dem Detektor (30) gelieferten Signals zu bestimmen und um gegebenenfalls seinen Pegel zu korrigieren, indem durch Einwirken auf den Heizwiderstand (32) die Temperatur des Detektors (30) geändert wird;
    – Validierungsschritt für die Apparatur durch Einspeisen einer Substanz für die Selbstkontrolle, deren chromatographische Parameter vorher geeicht worden sind;
    – Schritt zur Nutzung des Ergebnisses der Messungen durch Einwirken auf die physikalischen Parameter des Chromatographen;
    – Schritt zur Analyse der Probe, der darin besteht, die Konzentrationen der in der Probe vorhandenen Substanzen zu berechnen.

2. Verfahren nach Anspruch 1, dadurch gekennzeichnet, daß die Berechnung der Konzentrationen durchgeführt wird, indem entweder Beziehungen der Signalflächen der Substanzen untereinander hergestellt werden, oder, wenn alle Substanzen nachgewiesen worden sind, Beziehungen der Signalflächen jeder Substanz zu der Fläche der Substanz für die Selbstkontrolle herstellt werden.

3. Verfahren nach Anspruch 2, dadurch gekennzeichnet, daß die Bestimmung der Flächenbeziehung der Signale zwischen den Signalflächen der Substanzen, die die zu analysierende Probe bilden, und der Summe der Signalflächen der Substanzen, die die auf 100 normierte Probe bilden, durchgeführt wird.

4. Verfahren nach Anspruch 2, dadurch gekennzeichnet, daß die Bestimmung der Flächenbeziehung der Signale zwischen jeder Signalfläche der Substanzen und der Signalfläche der Substanz für die Selbstkontrolle durchgeführt wird.

5. Verfahren nach Anspruch 1 oder 4, dadurch gekennzeichnet, daß dem Schritt für die Validierung der Analyse ein Schritt zur Eichung vorausgeht, in welchem man Eichsubstanzen und Substanzen zur Selbstkontrolle einführt, um eine Beziehung zwischen den Flächen des Signals der Eichsubstanzen und des Signals der Substanzen für die Selbstkontrolle zu bestimmen.

6. Verfahren nach Anspruch 1, dadurch gekennzeichnet, daß das Einwirken im Falle einer Spur des der Substanz zur automatischen Kontrolle entsprechenden Signals darin besteht, ein Ansteigen der Temperatur des Injektors mittels eines Widerstands (12) zu bewirken.

7. Verfahren nach Anspruch 1, dadurch gekennzeichnet, daß das Einwirken im dem Falle, wo die Reproduzierbarkeit der Signalflächen der Substanzen für die Selbstkontrolle korrekt ist, darin besteht, die Temperatur des Ofens im Falle einer Änderung des Rückhaltezeitunterschieds einer ersten Substanz für die Selbstkontrolle, die eine Rückhaltezeit hat, die über der Totraumzeit liegt, und einer zweiten Substanz für die Selbstkontrolle, die von der Totraumzeit abweicht, zu modifizieren.

8. Verfahren nach Anspruch 1, dadurch gekennzeichnet, daß das Einwirken darin besteht, einen anderen, auf dem Chromatographen (2) montierten Injektor bereitzustellen, falls eine wesentliche Änderung der Fläche der Signale der Substanzen für die Selbstkontrolle festgestellt wird.

9. Verfahren nach einem der vorhergehenden Ansprüche, dadurch gekennzeichnet, daß während des Validierungsschritts für die Apparatur n mal die Substanzen für die Selbstkontrolle eingeführt werden, um die Standardhöhe, die Standardfläche und die Rückhaltezeit der Scheitelwerte des den Substanzen für die Selbstkontrolle entsprechenden Signals zu messen.

10. Verfahren nach einem der vorhergehenden Ansprüche, dadurch gekennzeichnet, daß es eine Berechnung der Reproduzierbarkeit (r) nach der Formel $r = \frac{\sigma}{m} \cdot \sqrt{2} \cdot 2$ aufweist, um Probleme auf dem Niveau des Fluidkreises feststellen zu können.

11. Verfahren nach einem der vorhergehenden Ansprüche, dadurch gekennzeichnet, daß es einen Initialisierungsschritt umfaßt, der die Bestimmung aller zu testenden Parameter und die Grenzen dieser Parameter ermöglicht.

12. Verfahren nach einem der vorhergehenden Ansprüche, dadurch gekennzeichnet, daß es einen Schritt zur Analyse des von der Probe gelieferten Ergebnisses umfaßt, einen Schritt, in dessen Verlauf das System den Trennungsgrad der Säule im Laufe der Zeit durch eine Auflösungsberechnung abschätzt.

13. Verfahren zum Abschätzen und zur Selbstvalidierung der Messungen eines chromatographischen Systems nach Anspruch 1, dadurch gekennzeichnet, daß es einen ersten, als Validierung bezeichneten Schritt aufweist, der die folgenden Phasen hat:

a) Initialisierung des Systems, das die Informationen bestimmt, auf welchen die Analyse beruhen wird;

b) Selbstkontrolle des Pegels und des Grundrauschens des Signals des Detektors, wenn keine Substanz zur Analyse in den Chromatographen eingespeist wird;

c) Einspeisen der Eichsubstanzen und der Substanzen zur Selbstkontrolle;

d) Messungen auf dem Niveau und bei dem Grundrauschen des Signals des Detektors und Berechnungen der Rückhaltezeiten, der Reproduzierbarkeit;

e) Selbstkontrolle der Detektoren und der Fluidkreise durch Analyse der Ergebnisse über die Rückhaltezeit der bei dem Totraum herauskommenden Substanz, über die Reproduzierbarkeit der Flächen, über den Pegel und das Grundrauschen des Signals des Detektors;

f) Wiederholung der vorhergehenden Schritte a, b, c, d.

14. Verfahren zum Abschätzen und zur Selbstvalidierung der Messungen eines chromatographischen Systems nach Anspruch 13, dadurch gekennzeichnet, daß es einen zweiten, als Eichung bezeichneten Schritt aufweist, der die folgenden Phasen hat:

– Bestimmung einer Beziehung zwischen der Fläche des Eichsubstanzscheitelwertes und der Fläche des Scheitelwertes der Substanz für die Selbstkontrolle, das während des Schritts e der Validierungsphase eingespeist wird;

– Selbstkontrolle des Injektionssystems durch Vergleich der Fläche und der Höhe der Scheitelwerte der Substanzen für die Selbstkontrolle mit den Werten, die während des Schritts a der Validierungsphase aufgezeichnet werden, und durch Abschätzung der Reproduzierbarkeit.

15. Verfahren zum Abschätzen und zur Selbstvalidierung der Messungen eines chromatographischen Systems nach Anspruch 14, dadurch gekennzeichnet, daß es einen dritten, als Analyse bezeichneten Schritt aufweist, der die folgenden Schritte hat:

a) Selbstkontrolle des Pegels und der Grundsubstanz des Signals des Detektors ohne Einspeisung einer Substanz;

b) Einspeisen einer Probe, dann der Substanzen zur Selbstkontrolle;

c) Messungen und Berechnungen der Rückhaltezeiten, der Flächen der Scheitelwerte, der Reproduzierbarkeit der Flächen, der Rückhaltezeiten;

d) Selbstkontrolle der Fluidkreise durch Analyse der Ergebnisse über die Rückhaltezeit, über die Fläche der Signalscheitelwerte, über die Höhe, über die Reproduzierbarkeit der Flächen und der Rückhaltezeiten und über die Abschätzung der Auflösung;

e) Wiederholung der vorhergehenden Schritte a, b, c, d.

16. Verfahren nach einem der Ansprüche 13 bis 15, dadurch gekennzeichnet, daß es wenigstens eine Doppelsubstanz für die Selbstkontrolle aufweist, von denen eine Substanz eine der Totraumzeit entsprechende Rückhaltezeit hat.

17. System, das die Bereitstellung eines Verfahrens nach einem der vorhergehenden Ansprüche ermöglicht, mit einer in einem Ofen (20) montierten chromatographischen Säule (2), mit einer Vorrichtung (4, 40, 41) zur Einspeisung von Trägergas, mit einer Vorrichtung (1) zur Injektion der verschiedenen zu analysierenden Substanzen, mit einer Detektiervorrichtung (3) mit einem Rechner (5) mit der Software, die die Bereitstellung des Verfahrens ermöglicht, mit einer Schaltung zur Analog-Digital-Umsetzung (52), die mit dem Detektor (30) der chromatographischen Säule (2) verbunden ist, mit einem Stellglied (42) der Vorrichtung zur Einspeisung von Trägergas, das mit einer Steuerschaltung (50) der Stellglieder verbunden ist, die ihrerseits mit dem Rechner (5) verbunden ist und dessen Steuerung unterliegt, mit einer Betätigungsvorrichtung (11) für ein Einspeisventil (10), das mit der Steuerschaltung (50) für die Stellglieder verbunden ist, um durch ein Auswählventil (100) entweder Substanzen zur Selbstkontrolle, die unter einem von einem Mikrostellventil (102) bestimmten Druck aus einem Behälter (103) kommen, oder Proben abgibt, die aus einem anderen Behälter (101) kommen, mit einer Vorrichtung (12) zur Erwärmung des Injektors (1) und mit einer Vorrichtung (32) zur Erwärmung des Detektors (30), die mit einer Steuerschaltung für die Temperatur der Erwärmungsvorrichtungen (12, 32, 20), des Injektors (1), des Detektors (30) und der chromatographischen Säule (2) verbunden ist, wobei die Steuerschaltung für die Temperatur (51) ihrerseits der Steuerung des rechners (5) unterliegt.

## Claims

1. Process for evaluating and automatically validating measurements from a chromatograph by the accurate studying of the chromatographic signal and of the self-regulating products in order to check that the equipment is operating correctly and if necessary to correct any drifts of the chromatographic parameters, comprising the following stages:

– the stage for analyzing the signal emitted by the detector (30) without any product being injected, so as to determine the level of the base line, the background noise and drift of the signal emitted by this detector (30) and if necessary to correct its level by varying the temperature of the detector (30) by action on the heating resistor (32);

– a stage for validating the equipment by injecting a self-regulating product of which the chromatographic parameters have previously been standardized;

– a stage for using the result of the measurements by acting on the physical parameters of the chromatograph; and

– a stage for analyzing the sample comprising calculating the concentrations of products in the sample.

2. Process according to Claim 1, characterised in that the concentrations are calculated either by comparing the surfaces of the signals of the products with one another, if all the products are detected, or by comparing the surfaces of the signals of each product with the surface of the self-regulating product.

3. Process according to Claim 2, characterised in that the ratio of the surface of the signals is determined between the surfaces of the signals of the products constituting the sample to be analysed and the sum of the surfaces of the signals of the products constituting the sample and standardized at 100.

4. Process according to Claim 2, characterised in that the ratio of the surface of the signals is determined between each surface of the signals of the products and the surface of the signal of the self-regulating product.

5. Process according to Claim 1 or 4, characterised in that the analysis validation stage is preceded by a calibration stage in which standard products and self-regulating products are introduced to determine a ratio between the surfaces of the signal of the standard products and of the signal of the self-regulating products.

6. Process according to Claim 1, characterised in that in the case of a signal trail corresponding to the self-regulating product the action comprises causing an increase in the temperature of the injector by means of a resistor (12).

7. Process according to Claim 1, characterised in that, if the repeatability of the surfaces of the signals of the self-regulating products is correct, the action comprises modifying the temperature of the furnace if the difference between the retention time of a first self-regulating product having a retention time greater than the dead volume time and a second self-regulating product emerging from the dead volume time varies.

8. Process according to Claim 1, characterised in that the action comprises using a further injector mounted on the chromatograph (2) if a large variation in the surface of the signals of the self-regulating products is detected.

9. Process according to any one of the preceding claims, characterised in that in the equipment validating stage the self-regulating products are introduced n times to measure the standard height, the standard surface area and the retention time of the signal peaks corresponding to the self-regulating products.

10. Process according to any one of the preceding claims, characterised in that it comprises calculating the repeatability (r) according to the formula r = $\frac{\sigma}{m}.\sqrt{2}.2$ to enable problems in the fluid circuit to be detected.

11. Process according to any one of the preceding claims, characterised in that it comprises an initialisation stage enabling all the parameters to be tested and the limits of these parameters to be determined.

12. Process according to any one of the preceding claims, characterised in that it comprises a stage for analyzing the results supplied by the sample, during the course of which stage the system evaluates the separation rate of the column over time by means calculating the resolution.

13. Process for evaluating and automatically validating the measurements of a chromatographic system according to Claim 1, characterised in that it comprises a first stage, known as the validation stage, comprising the following phases:

a) initialisation of the system defining the data on which the analysis is to be based;

b) self-regulation of the level and background noise of the detector signal when no products are injected into the chromatograph for analysis;

c) injection of standard products and self-regulating products;

d) measurements of the level and background noise of the detector signal and calculations of the retention times and repeatability;

e) self-regulation of the detectors and fluid circuits by analysis of the results with respect to the retention time of the product emerging at dead volume, to the repeatability of the surfaces, to the level and background noise of the detector signal;

f) repetition of preceding stages a, b, c and d.

14. Process for evaluating and automatically validating the measurements of a chromatographic system according to Claim 13, characterised in that it comprises a second stage, known as the calibration stage, comprising the following phases:

– determination of a ratio between the peak surface of the standard product and the peak surface of the self-regulating product injected during stage e of the validation phase;

– self-regulation of the injection system by comparison of the surface and the height of the peaks of the self-regulating products with the values recorded in stage a of the validation phase and by evaluating the repeatability.

15. Process for evaluating and automatically validating the measurements of a chromatographic system, according to Claim 14, characterised in that it comprises a third stage, known as the analysis stage, comprising the following stages:

a) self-regulation of the level and background noise of the detector signal without a product being injected;

b) injection of a sample then of self-regulating products;

c) measurements and calculations of the retention times, peak surfaces, repeatability of surfaces and retention times;

d) self-regulation of the fluid circuits by analyzing the results with respect to the retention time, the surface of the signal peaks, the height, the repeatability of the surfaces and the retention times, and the evaluation of the resolution;

e) repetition of preceding stages a, b, c and d.

16. Process according to any one of Claims 13 to 15, characterised in that it comprises at least one dual self-regulating product of which one product has a retention time corresponding to the dead volume time.

17. System for performing the process according to any one of the preceding claims, comprising a chromatographic column (2) mounted in a furnace (20), a device (4, 40, 41) for supplying a carrying gas, a device (1) for injecting the various products to be analysed, a detector device (3), a computer (5) with software for performing the process, an analog-digital conversion circuit (52) connected to the detector (30) of the chromatographic column (2), a device (42) for activating the vector gas supply device connected to a circuit (50) controlling the activating devices, which circuit is itself connected and controlled by the computer (5), a device (11) for activating an injection value (10) connected to the circuit (50) for controlling the activating devices in order to supply via a selector valve (100) either self-regulating products from a reservoir (103) at a pressure determined by a micro-valve (102) or samples from a further reservoir (101), a device (12) for heating the injector (1) and a device (32) for heating the detector (30) connected to a circuit for controlling the temperature of the heating devices (12, 32, 20), the injector (1), the detector (30), the chromatographic column (2), the temperature control circuit (51) itself being controlled by the computer (5).

FIG_1

**LEGENDE**

——— CONDUCTEUR ELECTRIQUE

═══ TUBE GAZ

〰〰 CABLE SIGNAL CHROMATOGRAPHIQUE

103
RESERVOIR AUTOCONTROLE

1020

102

50

1000

100

101
ECHANTILLON

11

10

CHROMATOGRAMME

ENREGISTREUR

DEBIT METRE

30

40

32

52
CAN

41

1      12

3

5

4

2    21

IMPRIMANTE

20

51
LCT

42
ACT

50
LCACT

EP 0 316 375 B1

# FIG.2

Initialisation du système — 60

AUTOCONTROLE NIVEAU ZERO — 61

↑ VALIDATION
APPAREILLAGE ↓

Injection ETALON + PRODUITS D'AUTOCONTROLE — 62

Intégration — 63

AUTOCONTROLE NIVEAU "1" — 611

Repeter n fois — 64

↑ CALIBRATION ↓

Calibration produits d'autocontrole — 65
Niveau de repetabilité — 66
AUTOCONTROLE NIVEAU "2" — 612

AUTOCONTROLE NIVEAU "0" — 61

↑ PHASE
D'ANALYSE ↓

Injection ECHANTILLON + PRODUITS D'AUTOCONTROLE — 67

Intégration — 68

AUTOCONTROLE NIVEAU "3" — 613

Repeter p fois — 69

# FIG_3

## AUTOCONTROLE NIVEAU "0"

```
        ┌──────────────────────────────────────────────┐
        │                                              │
     ╱◇╲              NON    ┌──────────────┐          ╱◇╲        OUI   ┌────────┐
    ╱ N ╲ ───────────────────│    TEMP.     │ ─ 6103  ╱ q fois ╲ ───────│ ARRET  │
    ╲    ╱                    │  DETECTEUR   │          ╲       ╱        └────────┘
     ╲◇╱                      └──────┬───────┘          ╲◇╱
  6100  │ OUI                        │          6105
        │                    ┌───────┴──────┐ ─ 6104
        │                    │      Dt      │
        │                    └──────────────┘
     ╱◇╲
    ╱ BF ╲           OUI          ▽ ALARME
6101 ╲    ╱ ───────────────────   ENCRASST
     ╲◇╱                           DETECTEUR
        │ NON                         6107
        │
     ╱◇╲                          ▽ t° four
    ╱ D  ╲          OUI             ELUTION      6108
6102 ╲    ╱ ───────────────────   PRODUIT LOURD
     ╲◇╱                           ALARME
        │
        ▽
```

6100   N

6101   BF

6102   D

6103   TEMP. DETECTEUR

6104   Dt

6105   q fois   OUI   ARRET

6107   ALARME ENCRASST DETECTEUR

6108   t° four   ELUTION PRODUIT LOURD ALARME

62 ou 66

$\underline{FIG.4}$

```
6126                6124        6120        6122                6126
IMPOSSIBLE          ◇ > ◇ > ◇                    IMPOSSIBLE
ARRET               H       S       H                    ARRET
                                                                
                    6125           <                    6123           <
                                                                
NOUVEL INJECTEUR        BON    MICROVANNE              NOUVEL
ALARME                         PRESSION               INJECTEUR
                    6121       AUTO CONTROLE
                    ◇
                    H                                  61231
                    BON
6110                                 6111
◇  NON    DEBIT GAZ        ACT
TAC1  →   VECTEUR DANS     42
 =        COLONNE
         OUI

6130                        6131
◇  OUI    PROBLEME DE
TAC2  →   SEPARATION DU A
>ou<      LA t° DU FOUR OU AU       NON
          VIEILLISSEMENT DE
NON       LA COLONNE

                    6132                    ◇
                    Dt              y fois
                                            6133
6128                                OUI
◇  TRAINEE  AVAL          ARRET
AMONT                               6134
         6135
TEMPS        61280
INJECTEUR FAIBLE   MISE EN MEMOIRE   PRODUIT TROP
                   S, M, TAC1, TAC2  CONCENTRE
61281          66
HAUSSE                              6136
t° D'INJECTEUR     CALCUL DE rn
                   6127

                   ◇  COMPARAISON  MAUVAIS    ALARME
                   τn-1, τn                   FENETRE DANS
                   61270                      COLONNE
                       BON                    61271

                                      6138
                   ◇  EVOLUTION       REGENERATION
                   DE LA   6137       OU
                   SEPARATION         ARRET
```

## FIG.5

## FIG.6A

## FIG.6B

# FIG_7

EP 0 316 375 B1

# FIG_8

# FIG_9